# EUROPEAN PATENT APPLICATION

(11) **EP 2 474 645 A1**
(43) Date of publication of application: **11.07.2012**
(21) Application number: 10813801.7
(22) Date of filing: 03.09.2010
(51) Int. Cl.: C23C 22/06, B32B 15/08, C23C 22/07, C23C 22/34

(54) **ALUMINUM ALLOY ARTICLE, ALUMINUM ALLOY MEMBER, AND PRODUCTION METHOD THEREFOR**

(30) Priority: 03.09.2009 JP 2009203786
(71) Applicant: Advanced Technologies, Inc., Gotenba-shi, Shizuoka 412-0047 (JP)
(72) Inventor: HIRAI, Kinji, Gotenba-shi Shizuoka 412-0047 (JP); FURUKAWA, Muneya, Seto-shi, Aichi 489-0909 (JP); AKIYAMA, Isamu, Gotenba-shi Shizuoka 412-0047 (JP)
(74) Representative: Adam, Holger
(86) International application number: PCT/JP2010/065121
(87) International publication number: WO 2011/027854

(57) **Abstract**

Disclosed are an aluminum alloy article having an excellent bonding force between a resin and an aluminum alloy using an alkoxysilane-containing triazinethiol, and a method for producing the same. The aluminum alloy article comprises a substrate made of aluminum or an aluminum alloy, and a resin bonded onto at least a portion of a surface of the substrate through a dehydrated silanol-containing triazinethiol derivative layer. The aluminum alloy article comprises a metal compound layer containing at least one selected from the group consisting of a hydroxide, a hydrous oxide, an ammonium salt, a carboxylate, a phosphate, a carbonate, a silicate, and a fluoride between the substrate and the dehydrated silanol-containing a triazinethiol derivative layer.

## Description

### Technical Field

The present invention relates to aluminum and an aluminum alloy article in which a resin is bonded onto at least a portion of a surface thereof, an aluminum alloy member subjected to a surface treatment so as to coat a resin on at least a portion of a surface thereof, and methods for producing them. More particularly, the present invention relates to an aluminum alloy article and an aluminum alloy member being excellent in bonding force between a resin and an aluminum alloy substrate, and methods for producing them.

### Background Art

Aluminum and aluminum alloys are light-weight, have high specific strength and are also excellent in workability, and are therefore widely used as industrial materials. An aluminum alloy article in which a resin is bonded onto at least a portion of a surface of an aluminum alloy substrate can ensure excellent strength and rigidity, which cannot be obtained by using a resin molded article alone, by an aluminum alloy substrate, and also can obtain a complicated shape and aesthetics, which cannot be achieved by using an aluminum alloy substrate alone, by a resin, and thus the aluminum alloy article is used in various fields including the above-mentioned applications.

There has hitherto be employed a method in which an aluminum alloy substrate is provided with notches or bore holes in advance and, when a resin is in-mold molded to an aluminum alloy substrate by injection molding, the resin penetrate into these portions thereby fixing the resin to the aluminum alloy substrate.

However, it is necessary to ensure space on the aluminum substrate to be provided with notches or bore holes in this method. Therefore, there are a problem such as large design constraints and a problem that a bonding force does not work between a substrate and a resin at the portion other than the notch or bore hole portion, and thus a gap is formed between the resin and the substrate. Accordingly, by this conventional method, since the aluminum alloy substrate and the resin are not completely integrated with each other, the resin portion, not integrated with aluminum alloy substrate is easily deformed when stress is applied.

Thus, Patent Document 1 discloses, as a method which does not require notches or bore holes and also enables a bonding force to work on the entire surface of bonding between a resin and an aluminum alloy substrate, a method for producing an aluminum alloy article (a composite of an aluminum alloy and a resin) in which an aluminum alloy substrate is immersed in an aqueous hydrazine solution or the like to form recesses of 30 to 300 nm in diameter on a surface, and then a thermoplastic resin, a polyphenylene sulfide is injection-molded onto the surface of the aluminum alloy substrate.

For example, Patent Document 2 discloses that a surface of an aluminum alloy substrate is cleaned with an organic solvent or an acid to remove dirt or smudge and an oxide layer and then subjected to a surface treatment with a triazinethiol solution containing an organic solvent such as methanol or ethanol, and that the metal substrate subjected to the surface treatment and a resin incluing a rubber component or triazinethiols added therein as an additive are integratelly formed by injection molding.

### Prior Art Documents

### Patent Documents

Patent Document 1: JP-A-2009-6721
Patent Document 2: JP-A-8-25409

### Disclosure of the Invention

### Problems to be Solved by the Invention

However, since the resin to be used is a polyphenylene sulfide in the method described in Patent Document l, it is a problem that applicable resins are limited.

On the other hand, in the method of Patent Document 2, the surface of the aluminum or aluminum alloy is oxidized easily and a thick oxide layer is formed on the surface in a short period. Therefore, it is a problem that a sufficient bonding strength cannot be gained even if a surface treatment is performed using a triazinethiol solution within a short period after removing the oxide layer.

Thus, an object of the present invention is to provide an aluminum alloy article having an excellent bonding force between a resin and an aluminum alloy using an alkoxysilane-containing triazinethiol, and a method for producing the same. Another object of the present invention is to provide an aluminum alloy member for bonding a resin onto a surface thereof, and a method for producing the same.

### Means for Solving the Problems

The present invention is directed to an aluminum alloy article comprising a substrate made of aluminum or an aluminum alloy, and a resin bonded onto at least a portion of a surface of the substrate through a dehydrated silanol-containing triazinethiol derivative layer, wherein the aluminum alloy article comprises a metal compound layer (or film) containing at least one selected from the group consisting of a hydroxide, a hydrous oxide, an ammonium salt, a carboxylate, a phosphate, a carbonate, a silicate, and a fluoride between the substrate and the dehydrated silanol-containing a triazinethiol derivative layer (or coating).

The present invention is also directed to a method for producing an aluminum alloy article in which a resin is bonded onto at least a portion of a substrate made of aluminum or an aluminum alloy using an alkoxysilane-containing triazinethiol derivative, the method comprising the steps of forming a metal compound layer containing at least one selected from the group consisting of a hydroxide, a hydrous oxide, an ammonium salt, a carboxylate, a phosphate, a carbonate, a silicate and a fluoride on at least a portion of a surface of the substrate, using steam, or an aqueous solution of at least one selected from a hydroxide of Group I element, a salt of Group I element, a hydroxide of Group II element, a salt of Group II element, ammonia, an ammonium salt, hydrazine, a hydrazine derivative, amines, phosphoric acid, a phosphate, a carbonate, carboxylic acid, a carboxylate, silicic acid, a silicate and a fluoride, bringing the alkoxysilane-containing triazinethiol derivative into contact with the metal compound layer, and bonding the resin to the portion brought into contact with the alkoxysilane-containing triazinethiol derivative.

The present invention is further directed to an aluminum alloy member comprising a substrate made of aluminum or an aluminum alloy, and a dehydrated silanol-containing triazinethiol derivative or a silanol-containing triazinethiol derivative layer formed on at least a portion of a surface of the substrate, wherein the aluminum alloy member comprises a metal compound layer containing at least one selected from the group consisting of a hydroxide, a hydrous oxide, an ammonium salt, a carboxylate, a phosphate, a carbonate, a silicate and a fluoride between the substrate and the dehydrated silanol-containing a triazinethiol derivative layer or the silanol-containing triazinethiol derivative layer.

The present invention is further directed to a method for producing an aluminum alloy member in which an alkoxysilane-containing triazinethiol derivative is brought into contact with at least a portion of a substrate made of aluminum or an aluminum alloy, the method comprising the steps of forming a metal compound layer containing at least one selected from the group consisting of a hydroxide, a hydrous oxide, an ammonium salt, a carboxylate, a phosphate, a carbonate, a silicate and a fluoride on at least a portion of a surface of the substrate, using steam, or an aqueous solution of at least one selected from a hydroxide of Group I element, a salt of Group I element, a hydroxide of Group II element, a salt of Group II element, ammonia, an ammonium salt, hydrazine, a hydrazine derivative, amines, phosphoric acid, a phosphate, a carbonate, carboxylic acid, a carboxylate, silicic acid, a silicate and a fluoride, and bringing an alkoxysilane-containing triazinethiol derivative into contact with the metal compound layer.

### Effects of the Invention

According to the present invention, by introducing a certain metal compound layer into a surface of an aluminum alloy substrate, and introducing a reactive functional group into a surface of this metal compound layer using an alkoxysilane-containing triazinethiol derivative (for example, an alkoxysilane-containing triazinethiol metal salt), it is possible to provide an aluminum alloy member on which surface resin can be bonded with high bonding strength, and an aluminum alloy article having a high bonding strength between an aluminum alloy substrate and a resin, and a method for producing them.

### Brief Description of the Drawings

Fig. 1 is a sectional view of an aluminum alloy article according to the present invention.
Fig. 2 is a sectional view of a conventional aluminum alloy article.

### Embodiments for Carrying Out the Invention

The present inventors have studied why aluminum or aluminum alloys cannot gain , as compared with the case of a substrate made of the other metal such as a copper alloy, in case of forming an alkoxysilane-containing triazinethiol derivative layer capable of bonding an aluminum alloy substrate with a resin. As a result, they have found that it is caused by an oxide layer of the surface of an aluminum alloy substrate.

When metal and resin are bonded using an alkoxysilane-containing triazinethiol derivative, an alkoxysilane moiety is chemically bonded onto the metal, and thus a reactive functional group composed of a triazinethiol derivative moiety is introduced on a metal surface. When this functional group (a triazinethiol derivative moiety) is chemically bonded with the resin, it is possible to chemically bond the metal to resin through a dehydrated silanol-containing triazinethiol derivative (a product produced from the alkoxysilane-containing triazinethiol derivative as a result of a chemical bond of the alkoxysilane moiety with the metal), whereby, it becomes possible to obtain a strong bonding force.

Usually, bonding of an alkoxysilane group of the alkoxysilane-containing triazinethiol derivative with metal is performed by preparing a solution of the alkoxysilane-containing triazinethiol derivative and immersing the metal in this solution thereby reacting a hydroxyl group (OH group) of the metal surface with an alkoxysilane group. Therefore, there is commonly used a method in which an oxide layer of the metal surface is removed by a plasma treatment or the like and also a hydroxyl group (OH group) is introduced into the metal surface.

However, it is estimated that, since aluminum shows a strong bonding force with oxygen and an oxide layer formed on a surface of an aluminum alloy is dense and rigid, sufficient OH groups are not introduced, and thus sufficient number of bonds (density) cannot be obtained between the aluminum alloy and an alkoxysilane group. It is impossible to obtain a high bonding force only by removing the oxide layer since aluminum combines with oxygen in water or air to immediately form a new oxide layer.

Thus, the present inventors have reached an invention described in the present application in which an aluminum alloy substrate is subjected to a surface treatment to form a metal compound layer containing at least one selected from the group consisting of a hydroxide, a hydrous oxide, ammonium salt, carboxylate, a phosphate, a carbonate, silicate and fluoride, which reacts with an alkoxysilane group to bond therewith, on the aluminum alloy surface, and then the aluminum alloy substrate and a resin disposed on a surface thereof are strongly bonded using an alkoxysilane-containing triazinethiol.
The present invention will be described in detail below.

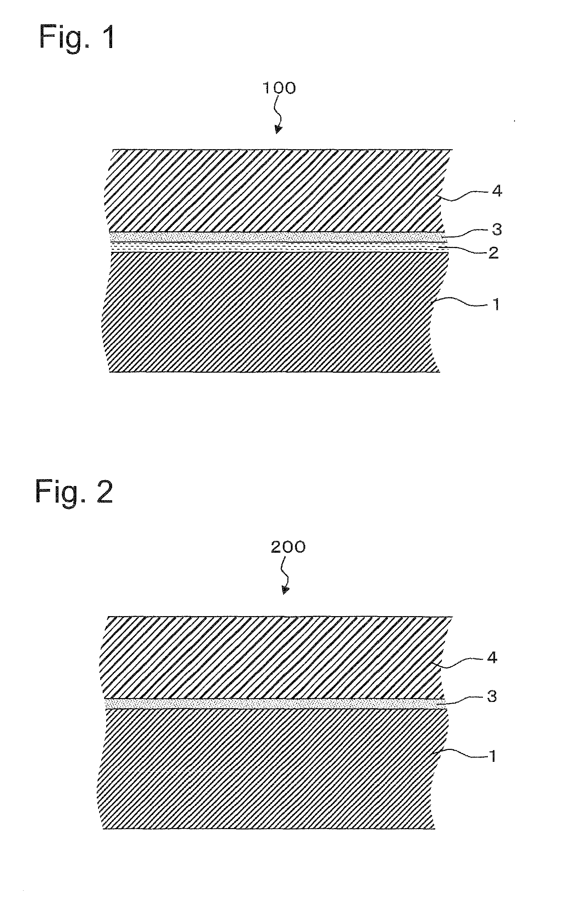

Fig. 1 is a sectional view schematically showing a portion of an aluminum alloy article according to the present invention, the entire of which is represented by 100. An aluminum alloy substrate 1 made of aluminum or an aluminum alloy, and a resin 4 are bonded through a metal compound layer 2 and a dehydrated silanol-containing triazinethiol derivative layer 3 which will be described in detail below.
A cross section of a conventional aluminum alloy article 200, in which an aluminum alloy substrate 1 and a resin 4 are bonded using a dehydrated silanol-containing triazinethiol derivative layer 3, is shown in Fig. 2. The conventional aluminum alloy article 200 does not have the metal compound layer 2.

The metal compound layer 2, which is a feature of the aluminum alloy article 100 according to the present invention, contains at least one selected from the group consisting of a hydroxide, a hydrous oxide, a carboxylate, a phosphate, a carbonate, a silicate and a fluoride.
The method for producing an aluminum alloy article 100 of the present invention, in which the aluminum alloy substrate 1 and the resin 4 are strongly bonded by using this metal compound layer 2, will be described in detail below.

### 1. Cleaning or Degreasing Treatment

The surface of the aluminum alloy substrate 1 sometimes becomes non-uniform by segregation of alloy elements and oxide layer formed in the production process, or rolling oil, cutting oil, press forming oil and the like used in processing sometimes adhere to the surface. Alternately, the surface is sometimes contaminated by rusting, adhesion of fingerprints and the like at the time of transportation. Therefore, a cleaning or degreasing treatment is preferably performed using an appropriate cleaning method considering surface state of the aluminum alloy substrate 1.

It is possible to use, as the cleaning or degreasing method, physical methods such as grinding, buffing and shot blasting methods; electrochemical methods in which an electrolytic treatment is performed in an alkaline degreasing solution, and then cleaning is performed using hydrogen or oxygen generated; and chemical methods using alkaline, acidic and neutral solvents (cleaning agents).

From the viewpoint of handiness of operations and superiority of costs, chemical cleaning methods are preferably used. The cleaning agent to be used in chemical cleaning may be any of industrially applicable cleaning agents including acidic cleaning agents such as a sulfuric acid-fluorine-based cleaning agent, a sulfuric acid-phosphoric acid-based cleaning agent, a sulfuric acid-based cleaning agent, a sulfuric acid-oxalic acid-based cleaning agent and a nitric acid-based cleaning agent; and alkaline cleaning agents such as a sodium hydroxide-based cleaning agent, a sodium carbonate-based cleaning agent, a sodium bicarbonate-based cleaning agent, a boric acid-phosphoric acid-based cleaning agent, a sodium phosphate-based cleaning agent, a condensed phosphoric acid-based cleaning agent, a fluoride-based cleaning agent and a silicate-based cleaning agent. It is preferrable to use aqueous weak alkaline solution (weak alkaline cleaning agents) such as a condensed phosphoric acid-based cleaning agent, a sodium phosphate-based cleaning agent, and a sodium bicarbonate-based cleaning agent since these cleaning agents are inexpensive and excellent in operability, and do not cause roughening of the surface of the aluminum alloy substrate 1.

In the present invention, it is indispensable that a roughening treatment of the surface is optionally performed after a cleaning treatment, and then a desired metal compound layer 2 is formed on the surface of the aluminum alloy substrate 1 by a metal compound treatment. Accordingly, in the cleaning treatment as a pre-step thereof, it is preferrable that a substance adhered onto the surface of the aluminum alloy substrate 1 is removed, and an oxide layer of aluminum or other metals on the surface of the substrate is removed thereby making the surface uniform so as to prevent inhibition of the treatment in the subsequent step, and also the aluminum alloy substrate 1 is prevented from excessively damaging by dissolution or the like in the cleaning. Therefore, it is preferrable to use a weak etching type cleaning agent which causes less dissolution of the aluminum alloy substrate 1, such as sodium orthosilicate, sodium metasilicate or sodium phosphate, and more preferably a non-etching type cleaning agent which causes no dissolution of the surface.

It is preferrable to use, as the non-etching type cleaning agent, a cleaning agent composed mainly of a condensed phosphate. Sodium pyrophosphate, sodium tripolyphosphate, sodium tetrapolyphosphate and the like can be used as the condensed phosphate and, for example, it is possible to use an aqueous solution in which the concentration of an alkaline component is 30 g/L (a condensed phosphate accounts for 50 to 60%) and the pH is about 9.5. Satisfactory cleaning can be performed under the conditions of a treatment temperature of 40 to 90°C and a treatment time of about 5 to 20 minutes. After cleaning, the aluminum alloy substrate is washed with water. The concentration of the alkaline component is preferably from 20 to 100 g/L, more preferably from 20 to 60 g/L, and most preferably from 20 to 40 g/L. The pH is preferably from 9 to 12 and temperature is preferably from 40°C to 60°C. It is possible to clean the surface and to make the surface uniform by immersing the aluminum alloy substrate 1 in an aqueous weak alkaline solution which satisfies these conditions.

It may possible to use, in addition to the above-mentioned cleaning agents, sodium salts such as sodium orthosilicate, sodium silicate, sodium carbonate, sodium bicarbonate and borax; various sodium phosphates such as sodium primary phosphate, sodium secondary phosphate and sodium tertiary phosphate; and phosphates such as sodium hexametaphosphate.

### 2. Roughening Treatment

It is preferred to perform roughening (rugging) of the surface of the aluminum alloy substrate 1 as a pre-treatment of a metal compound treatment which will be described in detail below. When the surface of the aluminum alloy substrate 1 is roughened, surfaces of a metal compound layer 2 and a dehydrated silanol-containing triazinethiol derivative layer 3 formed on the surface thereof are also roughened to form fine unevenness. When a resin 4 bonded penetrates into recesses of the surface of the dehydrated silanol-containing triazinethiol derivative layer 3, so-called anchor effect occurs, and thus the bonding strength can be more increased.

One of preferable roughening methods is to roughen the surface by treating an aluminum alloy substrate in an acidic or alkaline pH range where an aluminum alloy is dissolved, utilizing characteristics of aluminum which is amphoteric metal. That is, the surface of the aluminum alloy substrate is brought into contact with an acidic solution with the pH of 2 or lower, and preferably from 0 to 2, or an alkaline solution with the pH of 12 or higher, and preferably from 12 to 14.

It is preferred to use phosphoric acid, hydrochloric acid, sulfuric acid, nitric acid, sulfuric acid-hydrofluoric acid, sulfuric acid-phosphoric acid, sulfuric acid-oxalic acid or the like for roughening in an acidic pH range of 2 or lower. For example, the pH is adjusted to 1 or less by dissolving 10 to 20 g of hydrochloric acid in 1 liter of water and this aqueous hydrochloric acid solution is heated to a temperature of 40°C. The aluminum alloy substrate 1 is immersed in the heated solution for 0.5 to 2 minutes and then washed with water. It is preferred to use sodium hydroxide, potassium hydroxide, ammonia, sodium carbonate or the like for roughening in an alkaline pH range of 12 or higher. For example, the pH is adjusted to 13 or higher by dissolving 10 to 20 g of sodium hydroxide in 1 liter of water, and the aluminum alloy substrate 1 is immersed for 0.5 to 2 minutes at 40°C and then washed with water. It is preferred to adjust an arithmetic average roughness (surface roughness) Ra defined in Japanese Industrial Standard (J**I**S B0601: 2001) within a range from 0.1 to 0.6 µm by these treatments. More preferably, the surface roughness Ra is from 0.1 to 0.4 µm.

The aluminum alloy substrate 1 is made of aluminum or an aluminum alloy, and any of industrially applicable aluminum alloys can be used as the aluminum alloy. Examples of preferable aluminum alloy include (1) wrought alloys defined in Japanese Industrial Standard (JIS), such as 1,000 series (pure aluminum system), 2,000 series (Al-Cu and Al-Cu-Mg system), 3,000 series (Al-Mn system), 4,000 series (Al-Si system), 5,000 series (Al-Mg system), 6,000 series (Al-Mg-Si system), 7,000 series (Al-Zn-Mg system) and 8000 series (Al-Fe-Mn system); (2) casting alloys defined in JIS, such as AC1A and AC1B (A1-Cu system), AC2A and AC2B (Al-Cu-Si system), AC3A (Al-Si system), AC4A and AC4C (Al-Si-Mg system), AC4D (Al-Si-Cu-Mg system), AC5A (Al-Cu-Ni-Mg system), AC7A (Al-Mg system), AC8A and AC8B (Al-Si-Cu-Ni-Mg system), and AC9A and AC9B (Al-Si-Cu-Ni-Mg system); and (3) die-cast alloys defined in JIS, such as ADC1 (Al-Si system), ADC3 (Al-Si-Mg system), ADC5 and ADC6 (Al-Mg system), and ADC10, ADC12 and ADC14 (Al-Si-Cu system).

The shape thereof may be any shape including a sheet-like shape such as a rolled sheet, a tubular shape such as pipe, and a cylindrical shape such as wire.

### 3. Metal Compound Treatment

After optionally carrying out the above-mentioned cleaning treatment and/or roughening treatment, a surface of the aluminum alloy substrate 1 is subjected to a metal compound treatment (also referred to as a "compound treatment") to form a metal compound layer 2 (also referred to as a "compound layer") containing at least one of a hydroxide, a hydrous oxide, an ammonium salt, a carboxylate, a phosphate, a silicate and a fluoride.
The metal compound treatment is carried out using at least one of the below-mentioned compounds, acids and the like, for example, by immersing in an aqueous solution of these compounds, acids and the like.

As used herein, "metal" of "metal compound layer" means at least one kind among metals contained in an aluminum alloy substrate 1 and metals contained in a solution (metal compound treatment solution) to be used in a metal compound treatment which will be described in detail below.

The metal compound treatment is largely classified into an alkaline treatment using an alkaline solution, and an acidic treatment using an acidic solution. The respective treatments will be described in detail below.

Using a solution showing neutrality or alkalinity which will be described in detail below, the alkaline treatment is performed, for example, by immersing in these solutions. In the alkaline treatment, an aqueous solution of a compound, which shows neutrality to weak alkaline with the pH in a range from 7 to 12, is preferably used.

Using a solution showing acidity which will be described in detail below, the acidic treatment is performed, for example, by immersing in these solutions. In the acidic treatment, an aqueous solution of a compound, which shows weak acidity with the pH in a range from 2 to 5, is preferably used.

That is, since aluminum forms a passive layer of a stable oxide at pH 4 to 8 in an aqueous solution at 25°C, it sometimes becomes difficult to form a metal compound layer. When the pH is within a range from 2 to 4 and 8 to 12, aluminum gradually dissolves and a metal compound is precipitated on an aluminum alloy substrate by insolubilization due to an exchange reaction of the thus generated aluminum ions and the compound in the solution, or insolubilization of the compound due to a change in pH of the vicinity of the aluminum alloy substrate as a result of dissolution of aluminum, and thus a metal compound layer can be easily formed. Taking account of the case where the temperature of a treatment solution is sometimes controlled to 40°C or higher for the purpose of shortening the treatment time, the pH is practically preferably within the above-mentioned range of 2 to 5 (for acidic treatment) and 7 to 12 (for alkaline treatment). The pH within a range of 2 or lower and 12 or higher of the roughening treatment, which is applied to the roughening treatment, is not preferable for the metal compound treatment since it is sometimes difficult to form a metal compound layer because of a high dissolution rate of an aluminum alloy substrate.
The alkaline treatment and the acidic treatment will be specifically described by showing a solution to be used.

### 3-1. Alkaline Treatment

A metal compound treatment can be performed by immersing an aluminum alloy substrate 1 in a metal compound treatment solution (an aqueous solution of an alkaline compound) to be used in an alkaline treatment.

### (1) Hydroxide of Group I Element, Salt of Group I Element, Hydroxide of Group II Element, Salt of Group II Element

It is possible to use an aqueous solution of a hydroxide of Group I element (element of Group I in the Periodic Table) such as lithium, sodium, potassium, rubidium or cesium; a salt of Group I element; a hydroxide of Group II element (element of Group II in the Periodic Table) such as beryllium, magnesium, calcium, strontium, barium or radium; and a salt of Group II element. A metal compound layer 2 containing a hydroxide as a main component is formed on a surface of an aluminum alloy substrate 1 by using any one of them. Examples of the hydroxides serving as the main component of the metal compound layer 2 include aluminum hydroxide and metal hydroxide (metal is metal contained in the aluminum alloy substrate 1).

A hydroxide of Group I element, a salt of Group I element, a hydroxide of Group II element, and a salt of Group II element to be used in a metal compound treatment will be described in more detail.
Examples of the hydroxide of Group I element include sodium hydroxide and potassium hydroxide. For example, when the metal compound treatment is performed using an aqueous solution of sodium hydroxide, the treatment is preferably performed under the conditions of a concentration of sodium hydroxide of 0.04 to 0.4 g/L and a temperature of 30 to 80°C.

The salt of Group I element is a salt formed from Group I element and an acid, and is a metal salt which aqueous solution thereof shows alkalinity. It is a salt formed mainly by bonding a weak acid with Group I element, and examples of the salt of Group I element include sodium orthosilicate, sodium metasilicate, sodium carbonate, potassium carbonate, sodium hydrogen carbonate, potassium hydrogen carbonate, sodium acetate, potassium acetate, sodium laurate, potassium laurate, sodium palmitate, potassium palmitate, sodium stearate and potassium stearate. For example, when the metal compound treatment is performed using an aqueous solution of potassium carbonate, the treatment is preferably performed under the conditions of a concentration of potassium carbonate of 0.05 to 15 g/L and a temperature of 30 to 80°C.

Examples of the hydroxide of Group II element include calcium hydroxide and barium hydroxide. For example, when the metal compound treatment is performed using an aqueous solution of barium hydroxide octahydrate, the treatment is preferably performed under the conditions of a concentration of barium hydroxide octahydrate of 0.05 to 5 g/L and a temperature of 30 to 80°C.
The salt of Group II element is a salt formed from Group II element and a weak acid, and is a metal salt whose aqueous solution thereof shows alkalinity. It is a salt formed mainly by bonding a weak acid with Group II element, and examples of the salt of Group II element include calcium acetate, strontium acetate and barium acetate. For example, the metal compound treatment is performed using aqueous solution of barium acetate, the treatment is preferably performed under the conditions of a concentration of barium acetate of 0.05 to 100 g/L and a temperature of 30 to 80°C.

For example, when the metal compound treatment is performed using an aqueous solution of a silicate of Group I element such as sodium orthosilicate, sodium metasilicate or potassium silicate as a salt of Group I element and a salt of Group II element, the thus formed metal compound layer 2 often contains, as a main component, a silicate in addition to a hydroxide. Examples of the silicate include aluminum silicate and metal silicate (metal is metal contained in an aluminum alloy substrate 1). For example, when the metal compound treatment is performed using an aqueous solution of sodium orthosilicate, the concentration of sodium orthosilicate is preferably from 0.05 to 1 g/L, and the temperature is preferably from 30 to 80°C.

### (2) Ammonia, Hydrazine, Hydrazine Derivative or Water-Soluble Amine Compound

An aqueous solution of ammonia, a hydrazine, a hydrazine derivative or a compound of a water-soluble amine also shows alkalinity. A metal compound layer can also be formed by immersing an aluminum alloy substrate 1 in these aqueous solutions. On a surface of an aluminum alloy substrate 1, a metal compound layer 2 containing a hydroxide as a main component, such as aluminum hydroxide or metal hydroxide (metal is metal contained in an aluminum alloy substrate 1) is formed. The ammonia, hydrazine, hydrazine derivative or water-soluble amine is an amine-based compound in a broad sense, and it is possible to use, except for the ammonia and hydrazine, hydrated hydrazine, hydrazine carbonate and the like as the hydrazine derivative, and methylamine, dimethylamine, trimethylamine, ethylamine, diethylamine, triethylamine, ethanolamine, diethanolamine, triethanolamine, ethylenediamine, allylamine and the like as the water-soluble amine. For example, when the metal compound treatment is performed using an aqueous solution of hydrazine, the concentration of hydrazine is preferably from 0.5 to 100 g/L, and the temperature is preferably from 30 to 80°C.

Specific examples of the above-described "(1) hydroxide of Group I element, salt of Group I element, hydroxide of Group II element, salt of Group **II** element" and "(2) ammonia, hydrazine, hydrazine derivative or water-soluble amine compound" include carbonates such as sodium carbonate, potassium carbonate, ammonium carbonate, sodium hydrogen carbonate, potassium hydrogen carbonate and ammonium hydrogen carbonate. A metal compound layer 2 containing these carbonate, these hydrogen carbonate and/or hydroxide as main components is formed on a surface of an aluminum alloy substrate 1 by performing the metal compound treatment using an aqueous solution of these carbonates. These carbonate, hydrogen carbonate and/or hydroxide may contain aluminum carbonate and/or a carbonic acid metal salt (metal is metal contained in an aluminum alloy substrate 1). A plurality of carbonates other than Aluminum carbonate and carbonates of metal contained in the aluminum alloy substrate 1 may also be formed by performing the metal compound treatment in a solution containing a mixture of carbonates of different kinds of metals.
For example, when the metal compound treatment is performed using an aqueous solution of sodium carbonate, an aqueous solution is preferably used under the conditions of a concentration of sodium carbonate of 0.05 to 10 g/L, and a temperature within a range from 30 to 90°C.

### (3) Boehmite Treatment

A metal compound treatment can be performed by a boehmite treatment using a boehmite treatment solution.
The boehmite treatment is a treatment (1) in which an aqueous weak alkaline (pH is higher than 7 and 12 or lower (preferably lower than 12)) solution (a boehmite treatment solution) such as water (pure water) or an aqueous 0.3% triethanolamine solution or an aqueous 0.3% ammonia solution is heated to 50°C or higher (preferably 80°C or higher) and then an aluminum alloy substrate l is immersed in the heated water or aqueous weak alkaline solution, or a treatment (2) in which an aluminum alloy substrate 1 is exposed in pressurized steam.
When pure water or steam is used as a metal compound treatment solution, a metal compound treatment solution was described in the item of "alkaline treatment" herein, although this treatment is not an alkaline treatment in the strict sense of the word since it is neutral.
The metal compound treatment solution to be used in the boehmite treatment is preferably weak alkaline so as to efficiently form a hydroxyl group, and the reaction is preferably a hydration reaction.

A compound layer 2 made mainly of hydrous oxides (hydrate) of aluminum and metal contained in an aluminum alloy substrate 1 is formed on a surface of the aluminum alloy substrate 1 by performing the boehmite treatment. In many cases, the boehmite layer (or film) to be formed by this boehmite treatment is a non-porous layer containing γ-AlO**·**OH or γ-AlO·**O**H and α-Al₂O₃ as a main component. It is possible to form a comparatively uniform metal compound layer 2 in which a thickness is preferably from 0.02 to 10 µm, and more preferably from 0.05 to 2 µm, by the boehmite treatment.

As described above, the boehmite treatment is effective to an increase in bonding strength and is preferably as a metal compound treatment according to the present invention since a metal compound layer containing γ-AlO·OH as a main component can be formed, that is, OH groups can be formed, densely and uniformly, on a surface of an aluminum base material, and also a contact surface area is increased by forming much fine evennesses on a surface.

Preferred conditions of the boehmite treatment are as follows.
A boehmite treatment solution in which the pH is adjusted within a range from about 10 to 12 by adding at least one of ammonia, amine, alcoholamine and an amide-based substance as an additive to pure water is used. A preferable example of the boehmite treatment solution is an aqueous 3 g/L triethylamine solution, and the pH is about 10. The treatment temperature is preferably within a range from 50 to 100°C, more preferably from 80 to 100°C, and still more preferably from 90 to 100°C. When the treatment temperature is within the above range, dense metal compound layer can be obtained within a comparatively short time. The treatment time is preferably from 1 to 120 minutes. The thickness of the layer to be formed is from about 0.02 to 10 µm.

### 3-2. Acidic Treatment

Specific examples of the metal compound treatment solution to be used in acidic treatment are shown in below.

### (1) Phosphoric Acids, Phosphates

Using a solution of phosphoric acid and a phosphate, which contains -H₂PO₄, -HPO₄ or -PO₄, of phosphoric acid; metal hydrogen phosphates such as zinc hydrogen phosphate, manganese hydrogen phosphate and calcium hydrogen phosphate; metal dihydrogen phosphates such as calcium dihydrogen phosphate; and metal phosphates such as zinc phosphate, manganese phosphate, calcium phosphate, calcium sodium phosphate and zirconium phosphate; a metal compound treatment is performed. As used herein, phosphoric acid means acidic phosphoric acid in a broad sense, including orthophosphoric acid, metaphosphoric acid, pyrophosphoric acid and the like, and phosphate is a concept including an acidic compound of a phosphoric acid in a broad sense, such as orthophosphoric acid, metaphosphoric acid and pyrophosphoric acid.

By using phosphoric acid, a metal compound layer 2 containing aluminum phosphate and/or a metal phosphate and/or a hydroxide as main components is formed on a surface of an aluminum alloy substrate 1.

When a metal compound treatment is performed using an aqueous solution of phosphates (metal salts of phosphoric acid) such as zinc phosphate, zinc hydrogen phosphate, manganese phosphate, manganese hydrogen phosphate, metal hydrogen phosphate, metal dihydrogen phosphate, metal phosphate, calcium hydrogen phosphate, calcium dihydrogen phosphate, calcium phosphate, calcium sodium phosphate, zirconium phosphate, vanadium phosphate, and vanadium zirconium phosphate, a metal compound layer 2 containing these phosphates and/or hydroxides as main components can be formed on a surface of an aluminum alloy substrate 1. The metal compound layer 2 of these phosphates and/or hydroxides may aluminum phosphate and/or a phosphate of metal contained in aluminum alloy substarte 1 other than aluminum. A plurality of phosphates may be formed by performing a metal compound treatment in a solution containing a mixture of phosphates of different kind of metals.

For example, when the metal compound treatment is performed using an aqueous solution of zirconium phosphate, the aqueous solution is preferably used under the conditions of a concentration of 1 to 100 g/L, and a temperature of 20 to 90°C. When an aqueous solution of phosphoric acid and phosphate other than zirconium phosphate, such as phosphoric acid, zinc phosphate, zinc hydrogen phosphate, manganese phosphate, manganese hydrogen phosphate, metal hydrogen phosphate, metal dihydrogen phosphate, metal phosphate, calcium hydrogen phosphate, calcium dihydrogen phosphate and calcium phosphate is used, the aqueous solution is preferably used under the conditions of a concentration of 5 to 30 g/L, and a temperature of 20 to 90°C. The temperature is more preferably from 25°C to 75°C. On the other hand, when an aqueous solution of zirconium phosphate, vanadium phosphate and vanadium zirconium phosphate is used, the aqueous solution is preferably used under the conditions of a concentration of 0.2 to 2 g/L, and a temperature of 30 to 70°C. The temperature is more preferably from 50°C to 70°C.

### (2) Carboxylic Acid, Carboxylate

Using an aqueous carboxylic acid solution such as tannic acid, an aluminum alloy substrate 1 is subjected to a metal compound treatment. Whereby, a metal compound layer containing an aluminum salt and/or a metal salt of carboxylic acid, and/or a hydroxide as main components is formed on a surface of an aluminum alloy substrate 1.

Using an aqueous solution of a metal salt of formic acid, acetic acid, oxalic acid or succinic acid, metal compound treatment may be performed. In this case, a basic metal compound layer 2 in which a hydroxyl group is attached mainly to an aluminum salt and/or a metal salt and a portion thereof is formed on a surface of an aluminum alloy substrate 1. For example, when the metal compound treatment is performed using an aqueous metal oxalate solution, the aqueous solution is preferably used under the conditions of a concentration of 0.5 to 100 g/L, and a temperature of 30 to 70°C.

### (3) Fluoride

A metal compound layer can also be formed by immersing an aluminum alloy substrate 1 in an aqueous solution of fluorides such as hydrofluoric acid, sodium fluoride, potassium fluoride, ammonium fluoride, ammonium hydrogen fluoride, hydrosilicofluoric acid, ammonium silicofluoride, fluoroboric acid and ammonium fluoroboride. Whereby, a metal compound layer 2 containing aluminum fluoride and/or metal fluoride containing metal except for aluminum and/or hydroxides such as aluminum hydroxide and hydroxide of metal contained in the aluminum alloy substrate 1 as main components is formed on a surface of an aluminum alloy substrate 1. For example, the metal compound treatment is performed using an aqueous ammonium hydrogen fluoride solution, the aqueous solution is preferably used under the conditions of a concentration of 1 to 60 g/L, and a temperature of 30 to 70°C.

Among the above-mentioned metal compound treatments, the method described in "(1) hydroxide of Group I element, salt of Group I element, hydroxide of Group II element, salt of Group II element" and "(3) boehmite treatment" of the alkaline treatment, and the method described in "(1) phosphoric acid, phosphate" of the acidic treatment are preferably used.
The reason why the treatment using a hydroxide of Group I element, a salt of Group I element, a hydroxide of Group II element and a salt of Group II element, and the boehmite treatment are preferable is that a hydroxide and a hydrous oxide are likely to be densely formed on a surface of the aluminum alloy substrate and the OH group and the acid group are likely to bond with silanol produced as a result of hydrolysis of an alkoxysilane of a triazinethiol derivative, and that the bonding strength is large. The reason why the treatment with the phosphoric acid and phosphate is preferable is considered that the phosphate compound to be formed as a metal compound layer has large polarity, and the compound is likely to bond with silanol produced as a result of hydrolysis of an alkoxysilane of a triazinethiol derivative.
Among these treatments, a boehmite treatment is more preferable.

The alkoxysilane-containing triazinethiol derivative penetrates into a metal compound layer 2 and sites capable of reacting with the metal compound layer 2 increase, and thus silanol produced as a result of hydrolysis of an alkoxysilane of a triazinethiol derivative, and a hydroxyl group, a phosphoric acid group, a carbonic acid group, a carboxylic acid group or a fluoride of the metal compound layer 2 cause a dehydration reaction or a dehalogenation reaction by a heat treatment to form a chemical bond. In such a manner, it is possible to obtain a more rigid bond between the thus formed dehydrated silanol-containing triazinethiol derivative layer 3 and the metal compound layer 2.

Furthermore, when the resin 4 is cooled after boding to undergo shrinkage, a comparatively thick metal compound layer 2 has the effect of dispersing and absorbing stress generated between the resin 4 and the metal compound layer 2 thereby preventing peeling of the resin 4 and the generation of cracking of the metal compound layer 2.

The above-mentioned metal compound treatment using the solution includes not only immersion of all or portion of an aluminum alloy substrate 1 in a solution (a metal compound treatment solution), but also coating of all or portion of a surface of an aluminum alloy substrate 1 with the solution by spraying, application or the like, or bringing it into contacting with the solution.

Accordingly, as is apparent from the above description, a metal compound layer 2 is not necessarily formed over the entire surface of an aluminum alloy substrate 1, and may be appropriately formed only on a requisite portion.

As a matter of course, a metal compound treatment may be performed using two or more kinds of the above-mentioned method of forming a metal compound layer in combination.
That is, a metal compound layer may be formed using a solution mixed with the above-mentioned plural solutions (metal compound treatment solutions) to be used in the metal compound treatment. Alternatively, after performing a metal compound treatment using one kind of the above-mentioned solutions (metal compound treatment solutions) to be used in the metal compound treatment, metal compound treatment may be further performed using the other kind of a metal compound treatment solution.

The above-mentioned metal compound layer 2 obtained by the metal compound treatment is usually roughened. That is, surface roughness of the metal compound layer 2 increases as compared with that of the aluminum alloy substrate 1 before subjecting to the metal compound treatment.
For example, it is possible to form a metal compound layer 2 having Ra of 0.15 µm or more by subjecting a surface of an aluminum alloy substrate 1 having surface roughness Ra of 0.10 µm or less to the above-mentioned roughening treatment thereby increasing Ra to the roughness of 0.12 to 0.60 µm, and then further subjecting to the above-mentioned metal compound treatment. When the roughening treatment is not performed, that is, when a metal compound treatment is performed without subjecting a surface of an aluminum alloy substrate 1 having Ra of 0.10 µm or less to the roughening treatment, the surface roughness Ra of the thus formed metal compound layer 2 is less than 0.15 µm.
Since surface roughening of the metal compound layer 2 can increase a contact area between a dehydrated silanol-containing triazinethiol derivative layer 3 to be formed on a metal compound layer 2, and the metal compound layer 2, it contributes to an increase in bonding strength.

### 3. Coating of Alkoxysilane-Containing Triazinethiol Derivative

A metal compound layer 2 is formed on a surface of an aluminum alloy substrate 1 by the above-mentioned method, and then the metal compound layer 2 is formed with an alkoxysilane-containing triazinethiol derivative.
The alkoxysilane-containing triazinethiol derivative to be used may be, for example, a known one such as an alkoxysilane-containing triazinethiol metal salt.
That is, it is represented by the general formula shown in the following (Chemical Formula 1) or (Chemical Formula 2〉

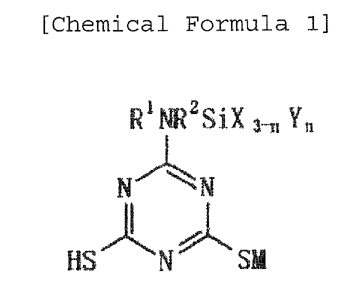

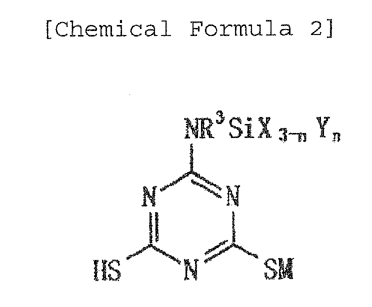

R¹, R² and R³ in the formulas are hydrocarbons. R¹ is, for example, anyone of H-, CH₃-, C₂H₅-, CH₂=CHCH₂-, C₄H₉-, C₆H₅-,
and C₆H₁₃-. R² R² is, for example, any one of -CH₂CH₂-,-CH₂CH₂CH₂-, CH₂CH₂CH₂CH₂CH₂CH₂-, -CH₂CH₂SCH₂CH₂- and-CH₂CH₂NHCH₂CH₂CH₂-. R³ is, for example,-(CH₂CH₂)₂CHOCONHCH₂CH₂CH₂- or - (CH₂CH₂)₂N-CH₂CH₂CH₂-. In this case, N and R³ form a cyclic structure.

X in the formula is any one of CH₃-, C₂H₅-, n-C₃H₇-, i-C₃H₇-, n-C₄H₉-, i-C₄H₉- and t-C₄H₉-. Y is an alkoxy group such as CH₃O-, C₂H₅O-, n-C₃H₇O-_{¡} i-C₃H₇O-, n-C₄H₉O-, i-C₄H₉O-or t-C₄H₉O-. n in the formula is any one of numericals of 1, 2 and 3. M is an alkaline metal, and preferably Li, Na, K, or Ce.

After forming a metal compound layer 2, a solution of an alkoxysilane-containing triazinethiol derivative is prepared so as to form a coating of the alkoxysilane-containing triazinethiol derivative on a surface of the metal compound layer 2. The solvent to be used may be a solvent in which the alkoxysilane-containing triazinedithiol derivative dissolves, and water and an alcohol-based solvent correspond to the solvent. For example, water, methanol, ethanol, propanol, carbitol, ethylene glycol, polyethylene glycol, and a mixed solvent thereof can also be used. The concentration of the alkoxysilane-containing triazinedithiol derivative is preferably from 0.001 to 20 g/L, and more preferably from 0.01 to 10 g/L.

The aluminum alloy substrate 1 with the metal compound layer 2 formed thereon is immersed in a thus obtained alkoxysilane-containing triazinedithiol derivative solution. The temperature of the solution is preferably within a range from 0°C to 100°C, and more preferably from 20°C to 80°C. The immersion period is preferably from 1 minute to 200 minutes, and more preferably from 3 minutes to 120 minutes.

Since an alkoxysilane moiety of the alkoxysilane-containing triazinethiol derivative is hydrolyzed into silanol by this immersion, an alkoxysilane -containing triazinethiol derivative is converted into a silanol-containing triazinethiol derivative after immersion, so that a hydrogen bond-like loose bond is formed between the derivative and the metal compound layer 2, and thus a chemical bond force can be obtained.

Whereby, it is possible to obtain an aluminum alloy member composed of an aluminum alloy substrate 1, a metal compound layer 2 and a silanol-containing triazinethiol derivative layer to be used to bond a resin onto the surface.

This aluminum alloy member is heated to a temperature of 100°C to 450°C for the purpose of performing a heat treatment of accelerating drying and a dehydration reaction. Since this heating causes a dehydration or dehalogenation bond reaction with at least one of a hydroxide, a carboxylate, a phosphate, silicic acid and a fluoride contained in the above-mentioned metal compound layer 2 in a silanol moiety of a silanol-containing triazinethiol derivative, the silanol-containing triazinethiol derivative is converted into a dehydrated silanol-containing triazinethiol derivative to form a chemical bond between the derivative and the metal compound layer 2.

As a result of this heat treatment, it is possible to obtain an aluminum alloy member composed of an aluminum alloy substrate 1, a metal compound layer 2 and a dehydrated silanol-containing triazinethiol derivative layer 3 to be used to bond a resin onto the surface.

Then, in order to more increase a bonding strength between this dehydrated silanol-containing triazinethiol derivative and the resin, the dehydrated silanol-containing triazinethiol derivative formed on the metal compound layer 2 is immersed, optionally and appropriately , in a solution containing auxiliary bonding agents, for example, dimaleimides such as N,N'-m-phenylenedimaleimide and compounds having bondability by a radical reaction, such as N,N'-hexamethylenedimaleimide; peroxides, such as dicumyl peroxide and benzoyl peroxide, or other radical initiators. After immersion, an aluminum alloy member is dried and heat-treated at a temperature of 30°C to 270°C for 1 minute to 600 minutes.

Whereby, in the dehydrated silanol-containing triazinethiol derivative, metal ions of the triazinethiol metal salt (triazinethiol derivative) moiety are removed and sulfur is converted into a mercapto group, and this mercapto group reacts with one of two double bond moieties of maleic acid of N,N'-m-phenylenedimaleimide to give a dehydrated silanol-containing triazinethiol derivative bonded with N,N'-m-phenylenedimaleimide.
A radical initiator has the effect of generating a radical by decomposition due to heat such as heating in case of molding a resin thereby causing opening of the other bond of two double bond moieties by the above maleic acid, resulting in reaction and bonding with the resin.

Furthermore, a solution prepared by dissolving a radical initiator such as peroxide or a redox catalyst in an organic solvent such as benzene or ethanol is adhered, optionally and appropriately, onto a surface of an aluminum alloy member by immersion or spraying using a spray, and then air-dried.

A radical initiator has the effect of generating a radical by decomposition due to heat such as heating in case of molding a resin thereby causing opening of the other bond of two double bond moieties by the above maleic acid, or acting on a metal salt moiety of a triazinethiol derivative, resulting in reaction and bonding with the resin.

Compositions of the metal compound layer 2 and dehydrated silanol-containing triazinethiol derivative layer 3 of the aluminum article 100 according to the present invention can be identified, for example, by X-ray photoelectron spectroscopy (XPS analysis).

An aluminum alloy member including a metal compound layer 2 and a dehydrated silanol-containing triazinethiol derivative layer 3 and a resin 4 are bonded (integrally combined) onto a surface of an aluminum metal substrate 1 to obtain an aluminum article 100. The resin 4 is disposed so as to be brought into contact with the dehydrated silanol-containing triazinethiol derivative layer 3 in a heated state. Whereby, the resin 4 reacts with a triazinethiol derivative moiety (triazinethiol derivative bonded with a triazinethiol metal salt moiety or bismaleimides) of the dehydrated silanol-containing triazinethiol derivative 3 through a radical of a radical initiator to form a chemical bond.
The resin may be disposed only at a portion of the dehydrated silanol-containing triazinethiol derivative layer 3.

In the present invention, the resin 4 is a concept including an adhesive. That is, when a resin capable of functioning as an adhesive is selected as the resin 4, it becomes possible to bond the obtained aluminum alloy article 100 with another article using the resin 4. Examples of another article include articles made of metal, which are made of metals such as aluminum, stainless steel, iron, magnesium, titanium, zinc, copper, or an alloy of these metals, and articles made of a resin. When another article is an article made of metal, a bonding strength with the adhesive resin 4 can be more increased by forming a metal compound layer 2 and a dehydrated silanol-containing triazinethiol derivative layer 3 on a surface thereof.

Examples of the method of disposing the heated resin 4 on the dehydrated silanol-containing triazinethiol derivative layer 3 include the following four methods.

A first method is an injection molding method in which an aluminum alloy member (including a metal substrate 1, a metal compound layer 2 and a dehydrated silanol-containing triazinethiol derivative layer 3) is disposed in a mold and, in case of injecting a molten resin into the mold to obtain an insert molded article or an outsert molded article, a radical initiator is decomposed by heat of the mold and resin and a triazinethiol derivative layer is chemically bonded with the resin by a radical reaction, thereby bonding the aluminum alloy member with the resin 4.

A second method is a first welding method in which an injection molded article is obtained by integrating an aluminum alloy member with a resin through injection molding, and then the obtained injection molded article is heated on an oven or hot sheet in a state of applying a load thereby decomposing a radical initiator, and chemically bonding the aluminum alloy member with the resin by a radical reaction.

A third method is a second welding method in which an aluminum alloy member (including a metal substrate 1, a metal compound layer 2 and a dehydrated silanol-containing triazinethiol derivative layer 3) is placed on a hot sheet and heated, and then a resin molded article (resin 4) is disposed thereon and a load is applied, thereby bringing the metal substrate into close contact with the resin, resulting in reaction and bonding.

A fourth method is a method in which an adhesive (resin 4) composed of a resin is applied to an aluminum alloy member (including a metal substrate l, a metal compound layer 2 and a dehydrated silanol-containing triazinethiol derivative layer 3) and another article to be bonded is disposed on this adhesive and then a predetermined load is applied and the aluminum alloy article and the resin 4 are bonded and also the resin 4 and another article are bonded by being left to stand at room temperature or curing with heating in an oven.
The adhesive (resin 4) may contain a reinforcer such as a glass fiber, a ceramic powder or a carbon fiber. The adhesive may be a sheet molding compound (SMC) of an uncured material obtained by mixing a thermosetting resin with a filler, impregnating a reinforcing fiber with a mixture, and forming into a sheet, or a bulk molding compound (BMC) obtained by forming a prepreg or a mixture prepared by mixing a thermosetting resin with a filler, glass fiber and the like using a mixer, into a bulk. In case of bonding at room temperature, it is necessary that the adhesive is reacted and cured at room temperature.

In case of using the first method, it is preferred that a mold temperature is adjusted within a range from 20 to 220°C, and an aluminum alloy member and a resin are maintained in a mold for 45 seconds to 10 minutes. In case of using the second to fourth methods, it is preferred that a temperature of an oven or hot sheet is adjusted within a range from 30 to 430°C and is maintained for 1 minute to 10 hours in a state where a load is applied. It is necessary that the temperature is a decomposition temperature or higher of a radical initiator, and the retention time is the time required for a radical to form a chemical bond of a triazinethiol derivative with a resin.

In case of bonding an aluminum alloy member with a resin, the method to be used is not limited to the above-mentioned injection molding method and welding method of heating an injection molded article, and any industrially applicable method of boding an aluminum alloy with a resin can be used. Preferred examples of such a bonding method include a hot plate welding method and the like. The hot plate welding method is a method in which a resin is melted by bringing it into contact with a heat source such as a high-temperature plate, and then an aluminum alloy member is pressed before the molten resin is solidified by cooling.

Any of industrially applicable resins can be used as the resin 4 to be bonded, and a resin having an element capable of reacting with a radical and a functional group is preferred. Examples of such a preferably resin include a phenol resin, a hydroquinone resin, a cresol resin, a polyvinylphenol resin, a resorcin resin, a melamine resin, a glyptal resin, an epoxy resin, a modified epoxy resin, a polyvinyl formal resin, polyhydroxymethyl methacrylate and a copolymer thereof, polyhydroxyethyl acrylate and a copolymer thereof, an acrylic resin, polyvinyl alcohol and a copolymer thereof, polyvinyl acetate, a polyethylene terephthalate resin, a polyimide resin, a polyetherimide resin, a polyketone-imide resin, a polybutylene terephthalate resin, a unsaturated polyester resin, a polyphenylene sulfide resin, a polyphenylene oxide resin, a polystyrene resin, an ABS resin, a polycarbonate resin (PC resin), a 6-nylon resin, a 66-nylon resin, a 610-nylon resin, an aromatic polyamide resin, a urea resin, a styrene-based elastomer resin, an olefin-based elastomer resin, a vinyl chloride-based elastomer resin, a urethane-based elastomer resin, an ester-based elastomer resin, an amide-based elastomer resin, composite resins in which two or more kinds selected from these resins are combined, and reinforced resins in which these resins are reinforced with a glass fiber, a carbon fiber, ceramics or the like.

When an adhesive is used as the resin 4, it is possible to use industrially applicable adhesives such as an epoxy-based adhesive, an acrylic adhesive, a polyurethane-based adhesive, a silicone-based adhesive, a rubber-based adhesive, a polyester-based adhesive, a phenol-based adhesive, a polyimide-based adhesive, a cyanoacrylate-based adhesive, an elastomer-based adhesive, and a hot melt-based adhesive, although there is no particular limitation on the kind of the adhesive. It is possible to use, as a sheet molding compound (SMC), those in which an unsaturated polyester resin is mixed with calcium carbonate and a glass fiber is impregnated with the obtained mixture, followed by forming into a sheet. It is possible to use, as a bulk molding compound (BMC), those obtained by mixing an unsaturated polyester resin with calcium carbonate and a glass fiber short fiber.

Thus, it becomes possible to produce an aluminum alloy article 100 in which an aluminum alloy substrate 1 and a resin 4 are bonded through a metal compound layer 2 and a dehydrated silanol-containing triazinethiol derivative layer 3.

The aluminum alloy article obtained by the present method has, in addition to an advantage that a bonding strength between an aluminum alloy substrate and a resin is high, an advantage that there is no particular need to subject a surface of an aluminum article to machining and also a resin can be bonded without using an adhesive, an elastic resin for stress relaxation or the like, and thus less processing man-hours are required and a bonding portion is satisfactorily finished and also an aluminum alloy article can be finished with satisfactory dimensional accuracy.

Furthermore, the aluminum alloy article has an advantage that an article is finished with resin molding accuracy by covering a portion with poor molding accuracy of an aluminum substrate 1 with a resin 4, and thus making it possible to increase a yield of the product.

### Examples

### (1) Cleaning or Degreasing Treatment

Aluminum alloy rolled sheets of 80 mm in length, 20 mm in width and 1.5 mm in thickness of A5052 (Japanese Industrial Standard, JIS A5052P) (Examples 1 to 22, Comparative Examples 1 to 30), and aluminum alloy die-cast sheets of 80 mm in length, 20 mm in width and 2.0 mm in thickness of ADC12 (Japanese Industrial Standard, JIS ADC12) (Example 23 to 44) were treated by the method described in detail below.
Before a cleaning treatment, surface roughness Ra (arithmetic average roughness Ra defined in JIS B0601: 2001) was measured using a laser microscope VK-8710 manufactured by KEYENCE CORPORATION. Ra of the A5052 rolled sheet was 0.08 µm, and Ra of the ADC12 die-cast sheet was 0.10 µm.

The cleaning treatment was performed by immersing an aluminum alloy substrate 1 in an aqueous solution in which the concentration of an alkaline component at a temperature of 40°C is 30 g/L (condensed phosphate accounts for 50 to 60%) and the pH is about 9.5, for 5 minutes. After the cleaning treatment, the aluminum alloy substrate was washed with pure water for 1 minute.
The surface roughness Ra measured after the cleaning treatment was 0.08 µm in the A5052 rolled material, while the surface roughness was 0.11 µm in the ADC12 die-cast sheet, and the surface roughness was almost unchanged as compared with the sample before the cleaning treatment.

After performing the cleaning treatment, a roughening treatment and a metal compound treatment were performed.
These conditions are shown in Table 1 and Table 2.

### (2) Roughening Treatment

The kind, concentration and pH of the treatment solution (aqueous solution) used, and the time of immersion in each treatment solution are shown in Table 1.
Samples of Examples 1 to 6 and Examples 23 to 28 were not subjected to a roughening treatment.

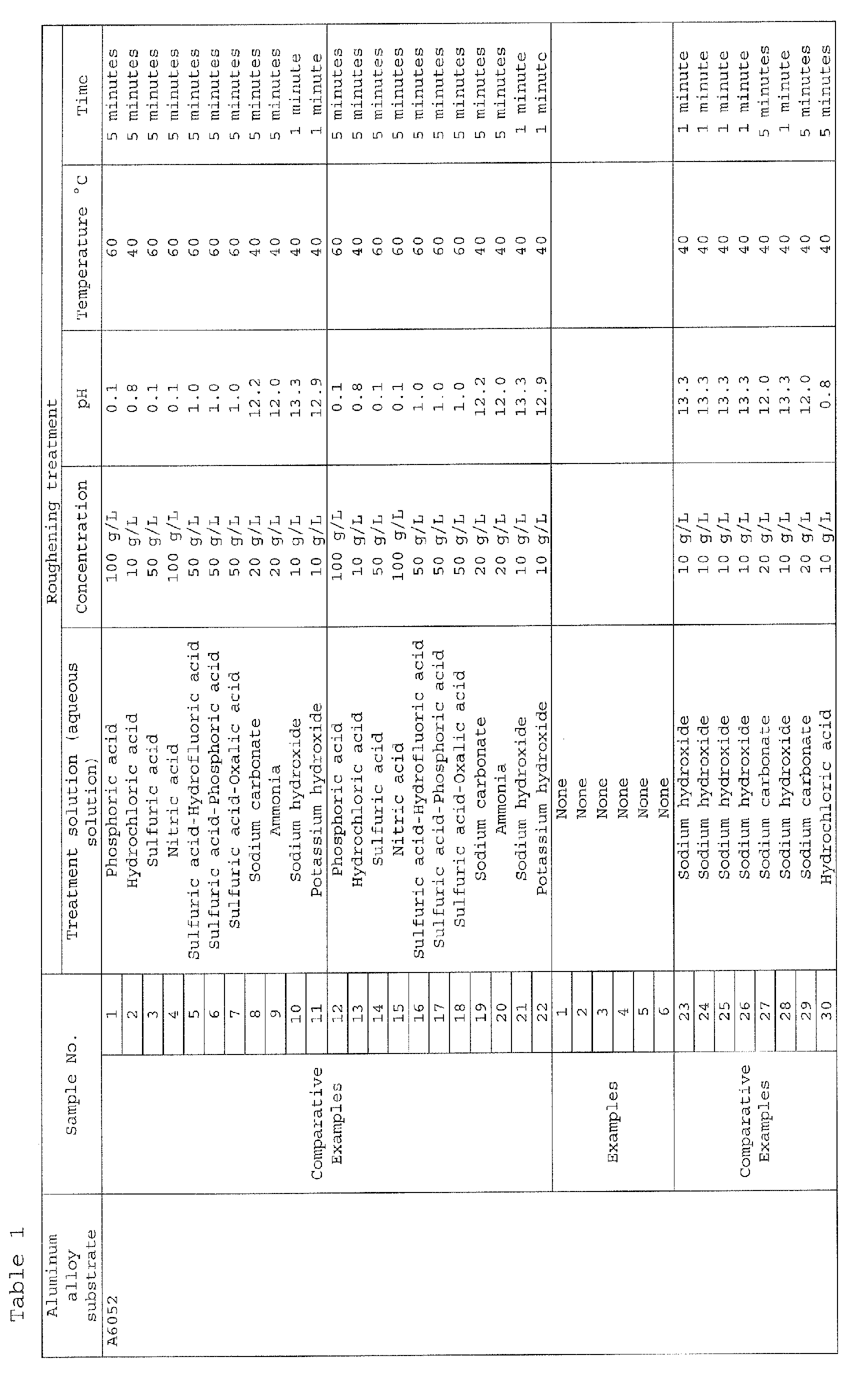

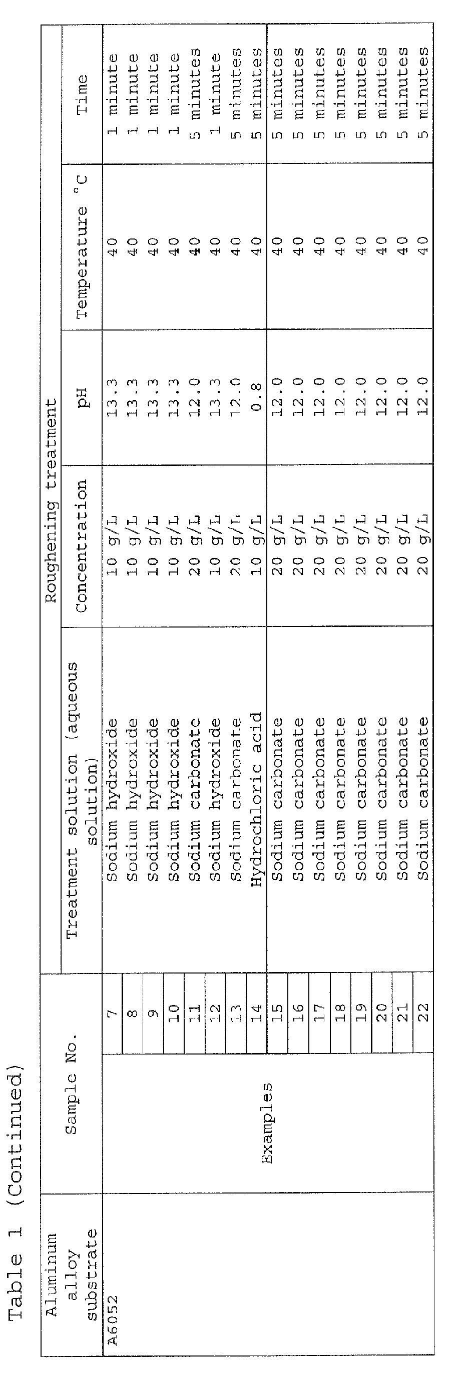

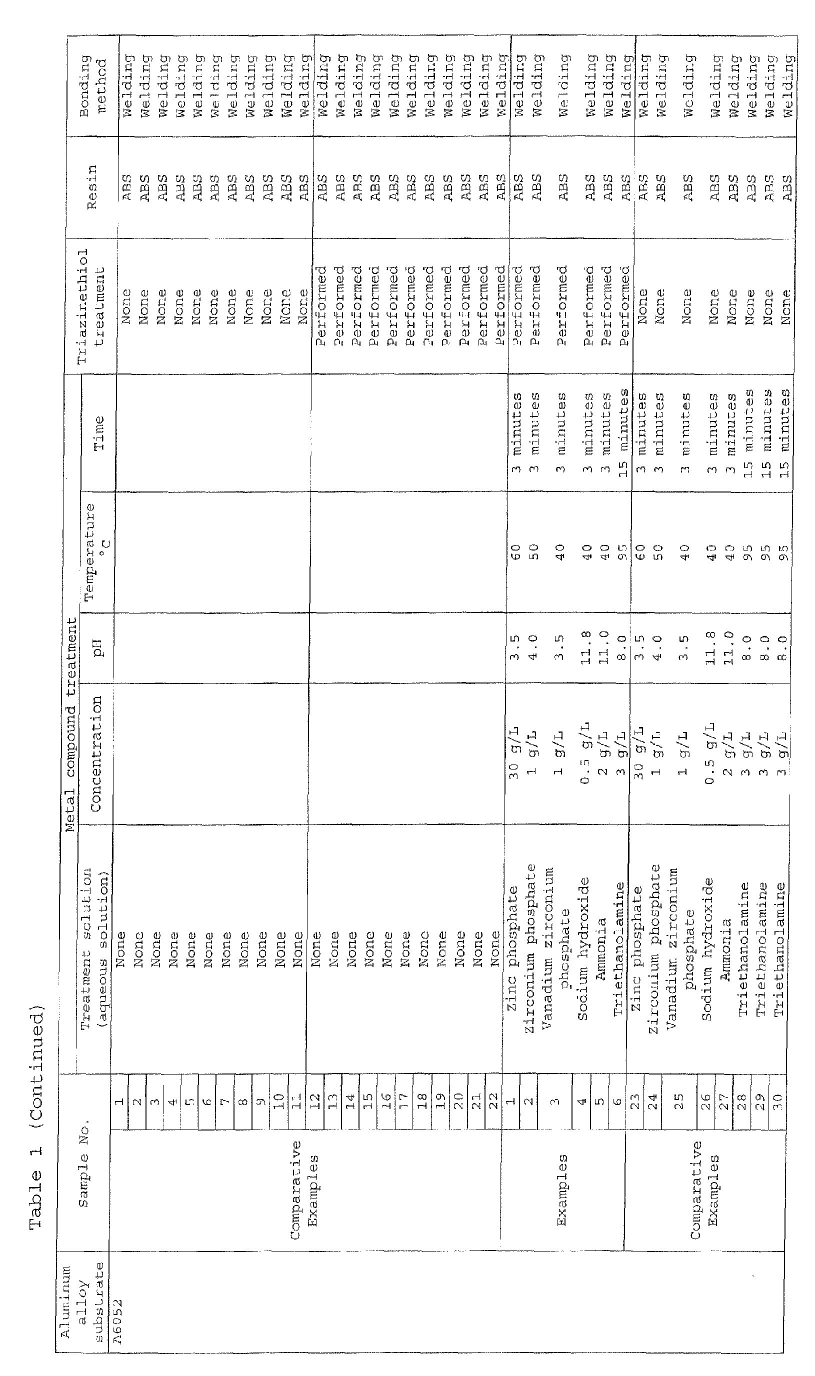

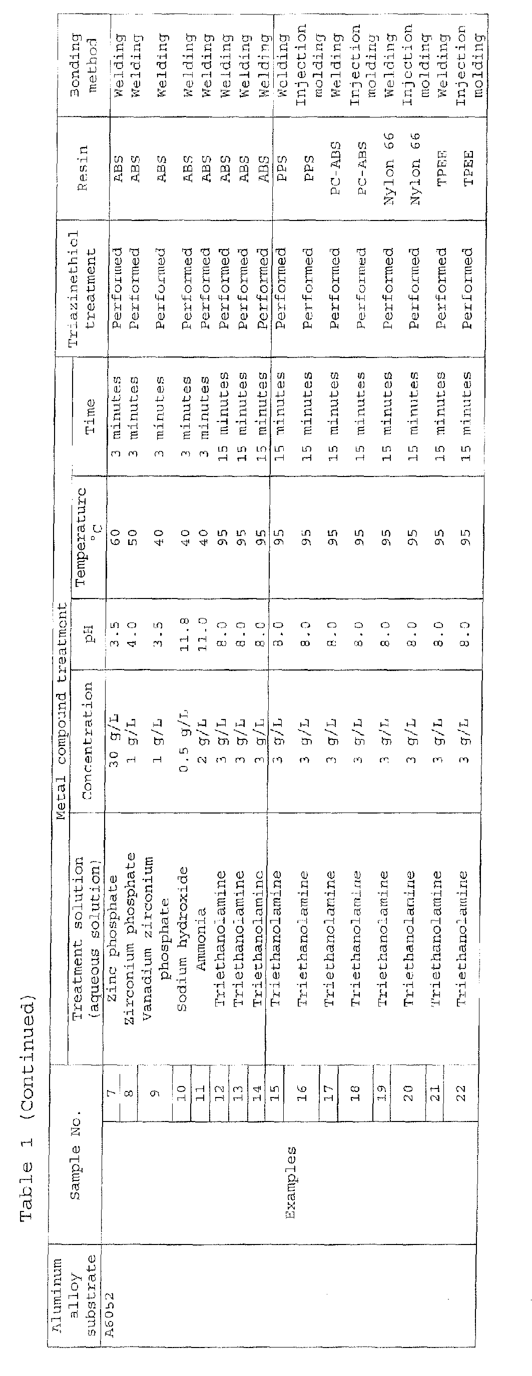

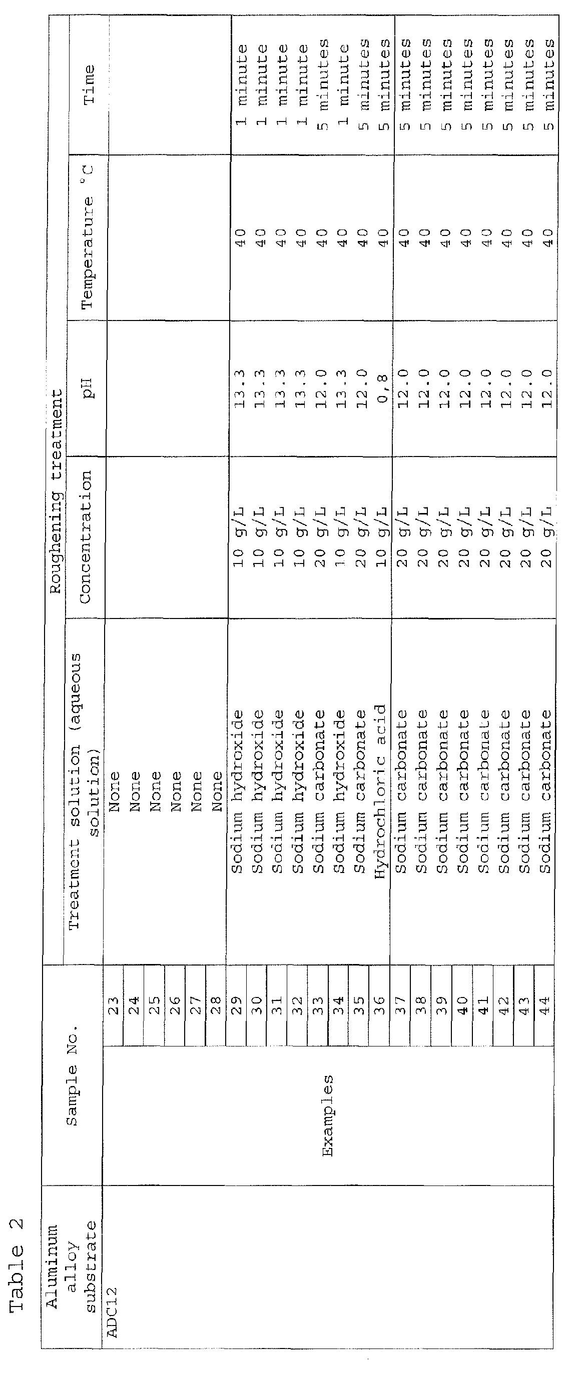

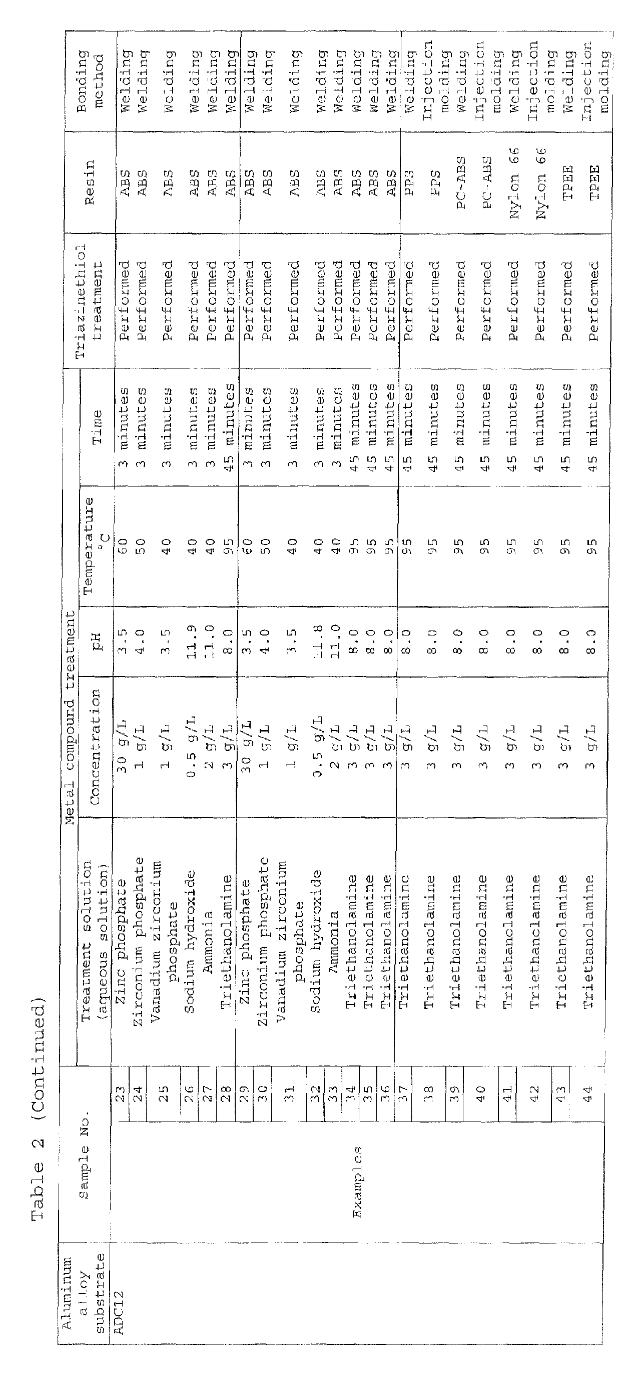

The surface roughness Ra of the samples subjected to the roughening treatment was 0.12 to 0.22 µm in the A5052 rolled material, while the surface roughness was 0.16 to 0.19 µm in the ADC12 die-cast sheet.

### (3) Metal Compound Treatment

Next, a metal compound treatment was performed under the conditions shown in Table 1 and Table 2.
Samples of Comparative Examples 1 to 22 were not subjected to the metal compound treatment.

In samples of Example 1, 7, 23 and 29, and a sample of Comparative Example 23 subjected to the metal compound treatment using an aqueous zinc phosphate solution, a metal compound layer containing zinc phosphate as a main component was formed on a surface of an aluminum alloy substrate 1.

In samples of Examples 2, 8, 24 and 30, and a sample of Comparative Example 24 subjected to a metal compound treatment using an aqueous zirconium phosphate solution, a metal compound layer containing zirconium phosphate as a main component was formed on a surface of an aluminum alloy substrate 1.

In samples of Examples 3, 9, 25 and 31, and a sample of Comparative Example 25 subjected to a metal compound treatment using an aqueous vanadium zirconium phosphate solution, a metal compound layer containing zirconium phosphate and vanadium phosphate as main components was formed on a surface of an aluminum alloy substrate 1.

In samples of Examples 4, 10, 26 and 32, and a sample of Comparative Example 26 subjected to a metal compound treatment using an aqueous sodium hydroxide solution, a metal compound layer containing a hydroxide as a main component was formed on a surface of an aluminum alloy substrate 1.

In samples of Examples 5, 11, 27 and 33, and a sample of Comparative Example 27 subjected to a metal compound treatment using an aqueous ammonia solution, a metal compound layer containing a hydroxide as a main component was formed on a surface of an aluminum alloy substrate 1.

Samples of Examples 6, 12 to 22, 28 and 34 to 44, and samples of Comparative Examples 28 to 30 were subjected to a boehmite treatment.
An aqueous triethanolamine solution having a concentration of 3 g/L and pH 8.0 was used as a boehmite treatment solution. After adjusting a temperature of the aqueous solution to 95°C, samples were immersed in the aqueous solution for 15 minutes. Then, a metal compound layer containing boehmite (γ-AlO·OH and α-Al₂O₃), which is a hydrous oxide of aluminum, as a main component was obtained.

The surface roughness Ra of the sample subjected to the metal compound treatment as mentioned above was 0.16 to 0.25 µm in the A5052 rolled material, while the surface roughness was 0.18 to 0.22 µm in the ADC12 die-cast sheets when a roughening treatment is performed. When the roughening treatment is not performed, the surface roughness was 0.11 to 0.13 µm in the A5052 rolled material, while the surface roughness was 0.13 to 0.15 µm in the Alice2 die-cast sheets.

In Table 3 to 4, the measurement results of the surface roughness Ra of samples of Examples and samples of Comparative Examples after the metal compound treatment are shown. Regarding samples which were not subjected to the metal compound treatment, the measurement results of the surface roughness Ra after the roughening treatment are shown.

**Table 3**

| Aluminum alloy substrate | Sample No. | | Surface roughness (µm) | Shear tensile strength (MPa) | 90 degree peel strength (N/mm) |
|---|---|---|---|---|---|
| A6052 | Comparative Examples | 1 | 0.18 | 0.0 | - |
| | | 2 | 0.13 | 0.0 | - |
| | | 3 | 0.18 | 0.0 | - |
| | | 4 | 0.12 | 0.0 | - |
| | | 5 | 0.21 | 0.0 | - |
| | | 6 | 0.20 | 0.0 | - |
| | | 7 | 0.20 | 0.0 | - |
| | | 8 | 0.22 | 0.0 | - |
| | | 9 | 0.13 | 0.0 | - |
| | | 10 | 0.15 | 0.0 | - |
| | | 11 | 0.17 | 0.0 | - |
| | | 12 | 0.18 | 0.0 | - |
| | | 13 | 0.13 | 0.0 | - |
| | | 14 | 0.18 | 0.0 | - |
| | | 15 | 0.12 | 0.0 | - |
| | | 16 | 0.21 | 0.0 | - |
| | | 17 | 0.20 | 0.0 | - |
| | | 18 | 0.20 | 0.0 | - |
| | | 19 | 0.22 | 0.0 | - |
| | | 20 | 0.13 | 0.0 | - |
| | | 21 | 0.15 | 0.0 | - |
| | | 22 | 0.17 | 0.0 | - |
| | Examples | 1 | 0.11 | 3.0 | - |
| | | 2 | 0.11 | 3.2 | - |
| | | 3 | 0.11 | 3.0 | - |
| | | 4 | 0.12 | 3.3 | - |
| | | 5 | 0.12 | 3.2 | - |
| | | 6 | 0.13 | 3.4 | - |
| | Comparative Examples | 23 | 0.16 | 1.2 | - |
| | | 24 | 0.16 | 1.2 | - |
| | | 25 | 0.16 | 1.1 | - |
| | | 26 | 0.20 | 1.4 | - |
| | | 27 | 0.24 | 1.2 | - |
| | | 28 | 0.22 | 1.0 | - |
| | | 29 | 0.25 | 1.4 | - |
| | | 30 | 0.16 | 1.6 | - |
| | Examples | 7 | 0.16 | 6.1 | - |
| | | 8 | 0.16 | 6.2 | - |
| | | 9 | 0.16 | 6.0 | - |
| | | 10 | 0.20 | 5.9 | - |
| | | 11 | 0.24 | 6.0 | - |
| | | 12 | 0.22 | 7.0 | - |
| | | 13 | 0.25 | 6.9 | - |
| | | 14 | 0.16 | 7.3 | - |
| | | 15 | 0.25 | 6.9 | - |
| | | 16 | 0.25 | 3.0 | - |
| | | 17 | 0.25 | 6.9 | - |
| | | 18 | 0.25 | 3.2 | - |
| | | 19 | 0.25 | 7.9 | - |
| | | 20 | 0.25 | 3.0 | - |
| | | 21 | 0.25 | - | 1.3 |
| | | 22 | 0.25 | - | 1.3 |

**Table 4**

| Aluminum alloy substrate | Sample No. | | Surface roughness (µm) | Shear tensile strength (MPa) | 90 degree peel strength (N/mm) |
|---|---|---|---|---|---|
| ADC12 | Examples | 23 | 0.13 | 3.6 | - |
| | | 24 | 0.13 | 3.6 | - |
| | | 25 | 0.13 | 3.5 | - |
| | | 26 | 0.14 | 3.9 | - |
| | | 27 | 0.13 | 3.7 | - |
| | | 28 | 0.14 | 4.0 | - |
| | | 29 | 0.18 | 8.0 | - |
| | | 30 | 0.18 | 8.0 | - |
| | | 31 | 0.18 | 8.1 | - |
| | | 32 | 0.18 | 8.2 | - |
| | | 33 | 0.18 | 8.3 | - |
| | | 34 | 0.21 | 8.5 | - |
| | | 35 | 0.22 | 9.0 | - |
| | | 36 | 0.20 | 8.7 | - |
| | | 37 | 0.22 | 8.7 | - |
| | | 38 | 0.22 | 6.8 | - |
| | | 39 | 0.22 | 8.9 | - |
| | | 40 | 0.22 | 7.0 | - |
| | | 41 | 0.22 | 9.5 | - |
| | | 42 | 0.22 | 7.3 | - |
| | | 43 | 0.22 | - | 1.8 |
| | | 44 | 0.22 | - | 3.7 |

### (3) Coating of Alkoxysilane-Containing Triazinethiol Derivative

Next, all samples of Examples (Examples 1 to 44) and samples of Comparative Examples 12 to 22 were immersed in an alkoxysilane-containing triazinethiol solution.
An alkoxysilane-containing triazinethiol derivative used is triethoxysilylpropyl aminotriazine thiol monosodium, and dissolved in a solvent of ethanol and water in a ratio of 95:5 (volume ratio) so that the concentration becomes 0.7 g/L to obtain a solution. Samples were immersed in this triethoxysilylpropyl aminotriazinethiol monosodium solution at room temperature for 30 minutes.

Then, these samples were subjected to a heat treatment in an oven at 160°C for 10 minutes, thereby completing a reaction and drying. Samples were immersed in an acetone solution containing N,N'-m-phenylenedimaleimide (N,N'-l,3-phenylenedimaleimide) in the concentration of 1.0 g/L and dicumyl peroxide in the concentration of 2 g/L at room temperature for 10 minutes, and then subjected to a heat treatment in an oven at 150°C for 10 minutes. Thereafter, an ethanol solution of dicumyl peroxide in the concentration of 2 g/L was sprayed over a surface of samples at room temperature, and then air-dried.

### (4) Bonding with Resin

Resins shown in Table 1 and Table 2 and the respective samples were bonded to obtain samples of aluminum alloy articles.
In samples of Examples 16, 18, 20, 22, 38, 40, 42 and 44, bonding was performed by injection molding.
Namely, a resin was molded into a sheet of 80 mm in length, 20 mm in width and 3 mm in thickness, and a portion of 12 mm in length of an end portion and 20 mm in width of one surface was disposed on the end portion of the above-mentioned aluminum alloy sheet sample subjected to a treatment and was in contacted with a portion of 12 mm in length and 20 mm in width, and this portion was bonded.

In samples of Examples 1 to 15, 17, 19, 21, 23 to 37, 39, 41, 43 and Comparative Examples 1 to 28, bonding was performed by a welding method (above-mentioned second welding method).
Namely, the respective samples were fixed so as to be in contact with various resin sheets shown in Table 1 and Table 2 using a heat-resistant tape, and then samples fixed by the heat-resistant tape were disposed on a heating unit set to a resin melting point (or a meltable temperature) of each resin. Samples were heat-welded by pressing at a load of 9 kgf from the above to obtain aluminum alloy article samples having the same shape as in the aluminum alloy article samples obtained by the above-mentioned injection molding.

Detailed of resin used are shown below.
In samples of Examples 16 and 38, a PPS resin (FORTRON PPS 1140A64) manufactured by Polyplastics Co., Ltd. was injection-molded at 320°C to obtain aluminum article samples.

In samples of Examples 18 and 40, a PC/ABS resin (IUPILON MB2215R) manufactured by Mitsubishi Engineering-Plastics Corporation was injection-molded at 270°C to obtain aluminum article samples.

In samples of Examples 20 and 42, 66 nylon (AMILAN CM3001-N) manufactured by Toray Industries, Inc. was injection-molded at 295°C to obtain aluminum article samples.

In samples of Examples 22 and 44, a TPEE elastomer resin (PRIMALLOY B1600N) manufactured by Mitsubishi Chemical Corporation was injection-molded at 230°C to obtain aluminum article samples.

In samples of Examples 1 to 14 and 23 to 36 and Comparative Examples 1 to 30, a resin sheet of an ABS resin (STYLAC (R)-ABS general-purpose 026) manufactured by Asahi Kasei Chemicals Corporation was fixed so as to obtain the above-mentioned shape, and the obtained samples were disposed on a heating unit set to 230°C and welded to obtain aluminum alloy article samples.

In samples of Example 15 and 37, a resin sheet of a PPS resin (FORTRON PPS 1140A64) manufactured by Polyplastics Co., Ltd. was fixed so as to obtain the above-mentioned shape, and the obtained samples were disposed on a heating unit set to 320°C and welded to obtain aluminum alloy article samples.

In samples of Examples 17 and 39, a resin sheet of a PC/ABS resin (IUPILON MB2215R) manufactured by Mitsubishi Engineering-Plastics Corporation was fixed so as to obtain the above-mentioned shape, and the obtained samples were disposed on a heating unit set to 260°C and welded to obtain aluminum alloy article samples.

In samples of Examples 19 and 41, a resin sheet of 66 nylon (AMILAN CM3001-N) manufactured by Toray Industries, Inc. was fixed so as to obtain the above-mentioned shape, and the obtained samples were disposed on a heating unit set to 290°C and welded to obtain aluminum alloy article samples.

In samples of Examples 21 and 43, a resin sheet of a TPEE elastomer resin (PRIMALLOY B1600N) manufactured by Mitsubishi Chemical Corporation was fixed so as to obtain the above-mentioned shape, and the obtained samples were disposed on a heating unit set to 230°C and welded to obtain aluminum alloy article samples.

### (5) Evaluation of Strength

Samples of Examples 1 to 20 and 23 to 42 and Comparative Examples 1 to 30 were subjected to a tensile test which will be described in detail below.
Samples of Examples 21, 22, 43 and 44 were subjected to a 90 degree peel test which will be described in detail below.

In a tensile test, using a testing machine Autograph AG-10TD manufactured by Shimadzu Corporation, an aluminum sheet portion (aluminum alloy base material) and an end portion (end portion of the opposite side of the bonding portion) of a resin sheet portion (resin) of an aluminum alloy article sample were respectively grasped with a flat chuck, and then a sample was stretched at a testing speed of 5 mm/minute until breakage occurs. Stress obtained by dividing a maximum ultimate load until breakage by a bonding area (12 mm in length and 20 mm in width) was regarded as a bonding strength (tensile shear strength). A test was performed three times about each sample.

In a 90 degree peel test, the alloy substrate was fixed to a fixing way of the tensile testing machine using a fixing jig so that an aluminum sheet portion (aluminum alloy base material) and a bonding surface of a resin of an aluminum alloy article sample become horizontal, and the portion apart from the bonding portion of the resin was grasped by a flat chuck, and then peeling was performed at a speed of 100 mm/minute by moving the flat chuck in a direction which forms an angle of 90 degree with a bonding surface to determine a peel strength (stress determined by dividing a maximum ultimate load by a bonding length (20 mm in length)) . A test was performed three times about each sample.

In Table 3 and Table 4, the tensile test results (tensile shear strength) and the 90 degree peel test results (90 degree peel strength) are shown.
The results of Table 3 and Table 4 show averages of the test results performed three times about each sample.

All samples of Examples showed excellent tensile shear strength such as 3.0 MPa or more. On the other hand, regarding samples of Comparative Examples, even in case of a sample showing the highest tensile shear strength, the tensile shear strength was 1.6 MPa and was far inferior to the tensile shear strength of samples of Examples. In samples of Examples, breakage of the bonding surface or the resin portion was confirmed. Furthermore, regarding a broken-out section (aluminum alloy plate side) of the bonding surface, adhesion of a resin or adhesive was recognized, and it was confirmed that breakage partially occurs in the resin.

Samples of Examples subjected to a 90 degree peel test showed a sufficiently high value of the 90 degree peel strength, such as 1.3 N/mm.

### [Description of Reference Numerals]

1: Aluminum alloy substrate
2: Metal compound layer
3: Dehydrated silanol-containing triazinethiol derivative layer
4: Resin

## Claims

1. An aluminum alloy article comprising a substrate made of aluminum or an aluminum alloy, and a resin bonded onto at least a portion of a surface of the substrate through a dehydrated silanol-containing triazinethiol derivative layer, wherein the aluminum alloy article comprises:
a metal compound layer containing at least one selected from the group consisting of a hydroxide, a hydrous oxide, an ammonium salt, a carboxylate, a phosphate, a carbonate, a silicate and a fluoride between the substrate and the dehydrated silanol-containing a triazinethiol derivative layer.

2. The aluminum alloy article according to claim 1, wherein the metal compound layer contains at least one of a hydrous oxide and a hydroxide of metal.

3. The aluminum alloy article according to claim 2, wherein the metal compound layer contains a hydrous oxide γ-AlO·OH.

4. The aluminum alloy article according to claim 1, wherein the metal compound layer contains at least one phosphate selected from the group consisting of a metal hydrogen phosphate, a metal dihydrogen phosphate, and a metal phosphate.

5. The aluminum alloy article according to claim 4, wherein the metal compound layer contains at least one selected from the group consisting of zinc phosphate, zinc hydrogen phosphate, manganese phosphate, manganese hydrogen phosphate, calcium hydrogen phosphate, calcium dihydrogen phosphate, calcium phosphate, calcium sodium phosphate, aluminum phosphate, zirconium phosphate, vanadium phosphate and vanadium zirconium phosphate.

6. A method for producing an aluminum alloy article in which a resin is bonded onto at least a portion of a substrate made of aluminum or an aluminum alloy using an alkoxysilane-containing triazinethiol derivative, the method comprising the steps of:
forming a metal compound layer containing at least one selected from the group consisting of a hydroxide, a hydrous oxide, an ammonium salt, a carboxylate, a phosphate, a carbonate, a silicate and a fluoride on at least a portion of a surface of the substrate, using steam, or an aqueous solution of at least one selected from a hydroxide of Group I element, a salt of Group I element, a hydroxide of Group II element, a salt of Group II element, ammonia, an ammonium salt, hydrazine, a hydrazine derivative, amines, phosphoric acid, a phosphate, a carbonate, carboxylic acid, a carboxylate, silicic acid, a silicate and a fluoride;
bringing the alkoxysilane-containing triazinethiol derivative into contact with the metal compound layer; and
bonding a resin to a portion brought into contact with the alkoxysilane-containing triazinethiol derivative.

7. The method according to claim 6, wherein the step of forming the metal compound layer is performed by forming the metal compound layer containing γ-AlO·OH using an aqueous solution having pH of higher than 7 and 12 or lower at a temperature of 80°C or higher.

8. The method according to claim 6, wherein the step of forming the metal compound layer is performed by forming the metal compound layer containing γ-AlO·OH using steam.

9. The method according to claim 6, wherein the aqueous solution contains at least one selected from the group consisting of zinc phosphate, zinc hydrogen phosphate, manganese phosphate, calcium hydrogen phosphate, calcium dihydrogen phosphate, calcium sodium phosphate, calcium phosphate, zirconium phosphate, vanadium phosphate and vanadium zirconium phosphate.

10. The method according to any one of claims 6 to 9, comprising a roughening treatment step of increasing surface roughness of the aluminum alloy substrate before the step of forming the metal compound.

11. An aluminum alloy member comprising a substrate made of aluminum or an aluminum alloy, and a dehydrated silanol-containing triazinethiol derivative or a silanol-containing triazinethiol derivative coated on at least a portion of a surface of the substrate, wherein the aluminum alloy member comprises:
a metal compound layer containing at least one selected from the group consisting of a hydroxide, a hydrous oxide, an ammonium salt, a carboxylate, a phosphate, a carbonate, a silicate and a fluoride between the substrate and the dehydrated silanol-containing a triazinethiol derivative layer or the silanol-containing triazinethiol derivative layer.

12. The aluminum alloy member according to claim 11, wherein the metal compound layer contains at least one of a hydrous oxide and a hydroxide of metal.

13. The aluminum alloy member according to claim 12, wherein the metal compound layer contains a hydrous oxide γ-AlO·OH.

14. The aluminum alloy member according to claim 11, wherein the metal compound layer contains at least one phosphate selected from the group consisting of a metal hydrogen phosphate, a metal dihydrogen phosphate and a metal phosphate.

15. The aluminum alloy member according to claim 14, wherein the metal compound layer contains at least one selected from the group consisting of zinc phosphate, zinc hydrogen phosphate, manganese phosphate, manganese hydrogen phosphate, calcium hydrogen phosphate, calcium dihydrogen phosphate, calcium phosphate, calcium sodium phosphate, aluminum phosphate, zirconium phosphate, vanadium phosphate and vanadium zirconium phosphate.

16. A method for producing an aluminum alloy member in which an alkoxysilane-containing triazinethiol derivative is brought into contact with at least a portion of a substrate made of aluminum or an aluminum alloy, the method comprising the steps of:
forming a metal compound layer containing at least one selected from the group consisting of a hydroxide, a hydrous oxide, an ammonium salt, a carboxylate, a phosphate, a carbonate, a silicate and a fluoride on at least a portion of a surface of the substrate, using steam, or an aqueous solution of at least one selected from a hydroxide of Group I element, a salt of Group I element, a hydroxide of Group II element, a salt of Group II element, ammonia, an ammonium salt, hydrazine, a hydrazine derivative, amines, phosphoric acid, a phosphate, a carbonate, carboxylic acid, a carboxylate, silicic acid, a silicate and a fluoride; and
bringing an alkoxysilane-containing triazinethiol derivative into contact with the metal compound layer.

17. The method according to claim 16, wherein the step of forming the metal compound layer is performed by forming the metal compound layer containing γ-AlO·OH using an aqueous solution having pH of higher than 7 and 12 or lower at a temperature of 80°C or higher.

18. The method according to claim 16, wherein the step of forming the metal compound layer is performed by forming the metal compound layer containingy-AlO·OH using steam.

19. The method according to claim 16, wherein the aqueous solution contains at least one selected from the group consisting of zinc phosphate, zinc hydrogen phosphate, manganese phosphate, calcium hydrogen phosphate, calcium dihydrogen phosphate, calcium sodium phosphate, calcium phosphate, zirconium phosphate, vanadium phosphate and vanadium zirconium phosphate.

20. The method according to any one of claims 16 to 19, comprising a roughening treatment step of increasing surface roughness of the aluminum alloy substrate before the step of forming the metal compound.
